Europäisches Patentamt

European Patent Office

Office européen des brevets

(11) Numéro de publication: **0 269 527**
A1

## (12) DEMANDE DE BREVET EUROPEEN

(21) Numéro de dépôt: 87402687.5

(22) Date de dépôt: 27.11.87

(51) Int. Cl.⁴: **B 60 K 17/35**
B 60 K 23/08, B 60 T 8/32

(30) Priorité: 28.11.86 FR 8616632

(43) Date de publication de la demande:
01.06.88 Bulletin 88/22

(84) Etats contractants désignés:
AT BE DE ES GB IT NL SE

(71) Demandeur: REGIE NATIONALE DES USINES RENAULT
Boîte postale 103 8-10 avenue Emile Zola
F-92109 Boulogne-Billancourt (FR)

(72) Inventeur: Marteau, Alain
6, rue Charles Vapereau
F-92500 Rueil-Malmaison (FR)

Valentin, Daniel
67, avenue de Buzenval
F-92500 Rueil-Malmaison (FR)

(74) Mandataire: Chassagnon, Jean Alain
8/10, avenue Emile Zola
F-92109 Boulogne-Billancourt (FR)

(54) Dispositif de transmission à quatre roues motrices.

(57) Dispositif de transmission pour véhicule automobile à 4 roues motrices caractérisé en ce qu'il comporte un module de transfert de couple entre l'essieu avant et l'essieu arrière du véhicule, ledit module de transfert de couple comprenant un système visqueux (5) associé à un embrayage de coupure muni d'un système de commande ; l'embrayage de coupure étant un embrayage à disques multiples (3) et le système de commande étant un ensemble à électro-aimant (4) qui comporte une carcasse (10), un bobinage (12) et un plateau de fermeture (11).

FIG.1

EP 0 269 527 A1

**Description**

DISPOSITIF DE TRANSMISSION A 4 ROUES MOTRICES

La présente invention se rapporte à un dispositif de transmission à 4 roues motrices, qui s'applique notamment sur les véhicules de tourisme automobile.

On connaît des dispositifs de transmission à 4 roues motrices, qui utilisent un système visqueux de manière à permettre le transfert du couple moteur entre l'essieu avant et l'essieu arrière du véhicule. De tels dispositifs présentent l'inconvénient majeur de perturber la répartition du freinage, nuisant ainsi à la stabilité du véhicule, et d'être incompatibles avec un système de freinage du type antiblocage des roues. En particulier la prise d'informations de la vitesse de référence du véhicule, c'est-à-dire l'intégration des vitesses des roues à cet instant, peut-être faussée et conduire alors à une mauvaise utilisation des stratégies d'antiblocage.

Pour éviter cet inconvénient, des systèmes de transmission à 4 roues motrices prévoient l'utilisation de dispositifs à roues libres. Ces dispositifs permettent la coupure de la liaison, lors du freinage, mais cette coupure a lieu également lors de la levée du pied sur l'accélérateur, ce qui a comme conséquence que l'on perd les avantages de la transmission à 4 roues motrices en retenue du véhicule.

Le but de la présente invention est de proposer un dispositif de transmission à 4 roues motrices, qui, tout en utilisant un système de répartition de couples entre l'essieu avant et l'essieu arrière, permette au freinage seulement de couper la liaison entre les deux essieux du véhicule.

A cet effet, le dispositif de transmission pour véhicule automobile à 4 roues motrices, selon l'invention, comprend un module de transfert de couple entre l'essieu avant et l'essieu arrière du véhicule. Ce module de transfert de couple comporte un système visqueux, qui est associé à un embrayage de coupure muni d'un système de commande. L'embrayage de coupure est du type à disques multiples.

Selon un mode de réalisation de l'invention, le système de commande est un ensemble à électro-aimant, qui comporte une carcasse, un bobinage et un plateau de fermeture, le plateau de fermeture reçoit les vis de liaison du plateau d'action de l'embrayage à disques multiples ; lesdites vis de liaison traversant le contre-plateau de l'embrayage à disques multiples.

Selon un mode de réalisation de l'invention, le système de commande consiste en une commande hydraulique, dans laquelle le plateau d'action de l'embrayage à disques multiples est commandé par un diaphragme, dont la périphérie s'appuie sur la cloche 47 du dispositif, et dont la partie centrale est commandée par une butée. Cette butée est liée à un piston, qui coulisse dans un corps muni d'un canal d'alimentation d'huile à haute pression, débouchant dans la chambre du vérin hydraulique ainsi constitué.

Selon un mode de réalisation de l'invention, le système de commande consiste en une commande hydraulique où le plateau d'action de l'embrayage à disques multiples est actionné par une butée poussée par un piston. Ce piston coulisse dans un couvercle du carter du dispositif. Le couvercle est muni d'un canal d'alimentation d'huile à basse pression débouchant dans la chambre du vérin hydraulique ainsi constitué. L'embrayage à disques multiples est monté sur un moyeu qui est solidaire du contre-plateau dudit embrayage, et qui est associé à l'arbre d'entrée au moyen de cannelures. Un ressort de rappel est disposé entre ce moyeu et le plateau d'action, qui est solidaire en rotation de l'arbre d'entrée au moyen desdites cannelures.

Selon un mode de réalisation de l'invention, le module de transfert de couple est intégré à la boîte de vitesses. Dans cette variante, le système visqueux est monté dans la boîte de vitesses elle-même, et l'embrayage à disques multiples ainsi que l'ensemble à électro-aimant sont disposés à l'intérieur d'un carter de fermeture. L'embrayage à disques multiples relie une cloche 34 solidaire de l'arbre d'entrée, à l'arbre de sortie. L'arbre de sortie est supporté au moyen d'une cage à aiguilles par ledit arbre d'entrée. Enfin, un couvercle de boîte de vitesses supporte l'arbre d'entrée, et reçoit le carter de fermeture, qui vient se monter directement sur ledit couvercle.

Selon un mode de réalisation de l'invention, le module de transfert de couple est intégré au pont de l'essieu arrière. Dans ce cas, le carter dudit module de transfert de couple est monté et est fixé directement sur le carter du pont de l'essieu arrière. L'arbre de sortie est l'arbre du pignon d'attaque du couple conique du pont de l'essieu arrière.

Selon un mode de réalisation de l'invention, le module de transfert de couple est disposé sur l'arbre de transmission longitudinal du véhicule, l'arbre de transmission avant étant relié à une des brides d'accouplement du module de transfert de couple, et l'arbre de transmission arrière étant relié à l'autre bride d'accouplement dudit module de transfert de couple.

Le dispositif de transmission à 4 roues motrices selon l'invention présente ainsi l'avantage de permettre l'utilisation des systèmes de freinage à antiblocage, tout en évitant des découplages intempestifs entre l'essieu avant et l'essieu arrière du véhicule.

D'autres caractéristiques et avantages de la présente invention ressortiront de la description qui suit de modes de réalisation donnés à titre d'exemple en référence aux dessins annexés sur lesquels :

    - la figure 1 représente en coupe longitudinale un mode de réalisation du module de transfert de couple selon l'invention ;

    - la figure 2 représente en coupe un mode de réalisation de la commande du module de transfert de couple selon l'invention ;

    - la figure 3 représente en coupe un autre mode de réalisation de la commande du module de transfert de couple ;

- la figure 4 est une vue extérieure schématique de l'ensemble de la transmission avec le module de transfert de couple associé et monté sur la boîte de vitesses ;

- la figure 5 représente en coupe longitudinale l'ensemble du module de transfert de couple et de la boîte de vitesses de la figure 4 ;

- la figure 6 est une vue extérieure schématique de l'ensemble de la transmission avec le module de transfert de couple associé et monté sur le pont de l'essieu arrière du véhicule ;

- la figure 7 est une coupe longitudinale de l'ensemble du module de transfert de couple et du pont correspondant à la figure 6 ;

- la figure 8 est une vue extérieure schématique de l'ensemble de la transmission avec le module de transfert de couple disposé sur la transmission longitudinale.

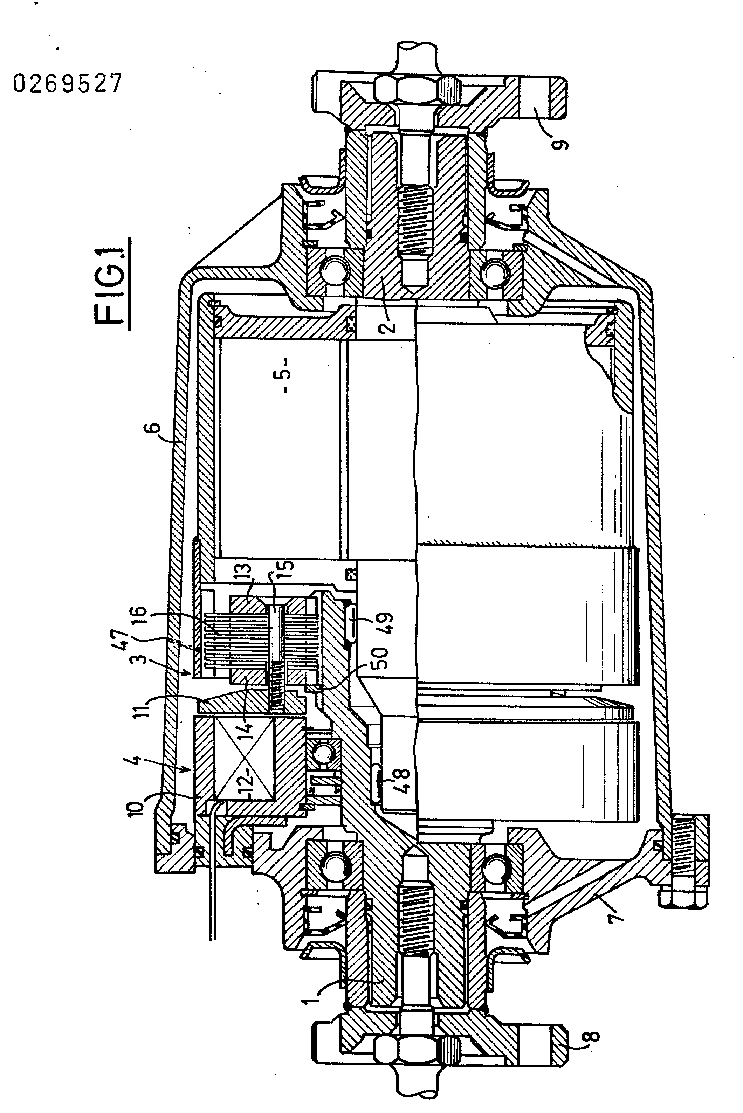

Le dispositif de transmission à 4 roues motrices pour véhicules automobiles selon l'invention comporte un module de transfert de couple entre l'essieu avant et l'essieu arrière, comme celui qui est représenté sur la figure 1. Le module de transfert de couple selon l'invention comprend un système visqueux 5, qui est associé à un embrayage de coupure muni d'un système de commande. Dans les modes de réalisation représentés sur les figures 1, 2, 3, 5 et 7, l'embrayage de coupure est un embrayage à disques multiples 3.

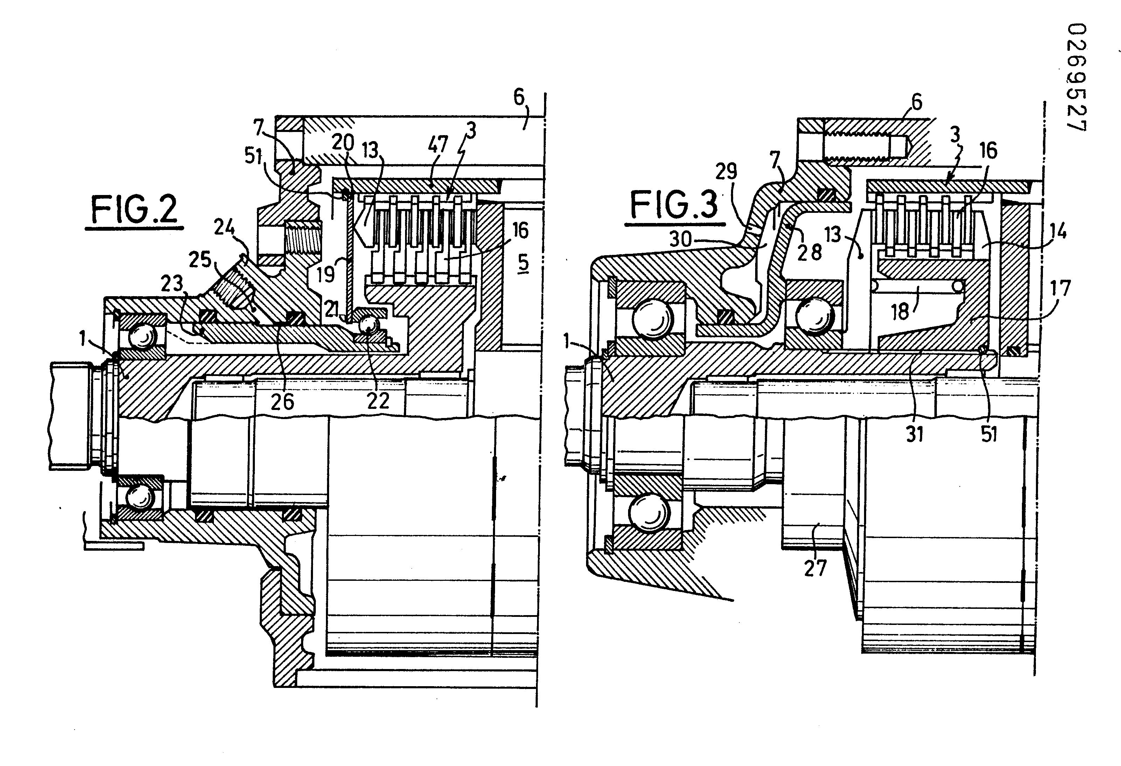

Le système de commande peut être soit un ensemble à électro-aimant 4, comme dans le cas des figures 1, 5 et 7, soit une commande hydraulique, comme sur les figures 2 et 3.

L'ensemble à électro-aimant 4 comporte une carcasse 10, qui reçoit un bobinage 12, et sur lequel vient se placer un plateau de fermeture 11. Un plateau d'action 13 de l'embrayage à disques multiples 3 est tenu par des vis de liaison 15 avec le plateau de fermeture 11. L'ensemble des disques 16 est retenu entre ce plateau d'action 13, et un contre-plateau 14, qui est traversé par lesdites vis de liaison 15. Une partie des disques 16 sont solidaires en rotation avec une cloche 47, qui est elle-même solidaire en rotation avec le système visqueux 5. L'autre partie des disques 16 est solidaire en rotation avec l'arbre d'entrée 1.

Le système visqueux 5 est solidaire en rotation avec l'arbre de sortie 2, dont l'extrémité est supportée par l'arbre d'entrée 1 au moyen de cages à aiguilles 48 et 49. L'arbre d'entrée 1 vient se monter dans un couvercle 7, qui est fixé sur un carter 6 enfermant l'ensemble du module de transfert de couple selon l'invention.

Lorsque le bobinage 12 est alimenté, le plateau de fermeture 11 est attiré vers la carcasse 10, et entraîne par l'intermédiaire des vis de liaison 15 le plateau d'action 13. Ce plateau d'action 13 vient appliquer les disques 16 les uns contre les autres, qui viennent en butée sur le contre-plateau 14 qui est arrêté par une plaque 50 solidaire de l'arbre d'entrée 1. L'embrayage à disques multiples 3 est alors fermé et le mouvement passe de l'arbre d'entrée 1 à l'arbre de sortie 2 par l'intermédiaire du système visqueux 5.

Dans le mode de réalisation représenté sur la figure 2 l'embrayage à disques multiples 3 est actionné par une commande hydraulique. Cette commande hydraulique consiste en un diaphragme 19, dont la périphérie 20 s'appuie sur la cloche 47 au moyen d'un anneau d'arrêt 51, et dont la partie centrale 21 est commandée par une butée 22 du type à roulement à bille. Cette butée 22 est elle-même liée à un piston 23 qui est monté et qui coulisse dans un corps 24. Le corps 24 est fixé sur le couvercle 7 du carter 6 de l'ensemble du dispositif. Le corps 24 est muni d'un canal d'alimentation 25 d'huile à haute pression qui débouche dans une chambre 26 du vérin hydraulique ainsi constitué par le piston 23 et le corps 24. Lorsque le vérin hydraulique est au repos, le diaphragme 19 appuie sur le plateau d'action 13 et l'embrayage 3 est fermé. Dans ce cas, l'arbre d'entrée 1 est relié à l'arbre de sortie 2 par l'intermédiaire du système visqueux 5. Lorsque l'huile à haute pression est envoyée dans le canal d'alimentation 25, le piston 23 coulisse vers la gauche et entraîne la partie centrale 21 du diaphragme 19 par l'intermédiaire de la butée 22. De ce fait, le plateau d'action 13 est libéré, et l'embrayage 3 est ouvert. Il n'y a plus de liaison entre l'arbre d'entrée 1 et l'arbre de sortie 2.

La figure 2 représente un autre mode de réalisation d'une commande hydraulique de l'embrayage à disques multiples 3. Dans ce cas le plateau d'action 13 de l'embrayage à disques multiples 3 est commandé par une butée 27, qui est elle-même actionnée par un piston 28. Ce piston 28 coulisse dans le couvercle 7 du carter 6 de l'ensemble du module de transfert selon l'invention. Le couvercle 7 est muni d'un canal d'alimentation 29 d'huile à basse pression débouchant dans une chambre 30 du vérin hydraulique ainsi constitué. L'embrayage à disques multiples 3 est monté sur un moyeu 17 qui est solidaire du contre-plateau 14. Ce moyeu 17 est lui-même monté sur l'arbre d'entrée 1 et coulisse sur cet arbre, avec lequel il est solidaire en rotation au moyen de cannelures 31. Le plateau d'action 13 est également monté sur l'arbre d'entrée 1, et il est solidaire en rotation avec cet arbre d'entrée 1 au moyen des mêmes cannelures 31. Un ressort de rappel 18 est disposé entre le moyeu 17 et le plateau d'action 13 de l'embrayage à disques multiples 3. Lorsque le vérin hydraulique est au repos, le ressort 18 repousse, d'une part, le moyeu 17 contre un anneau d'arrêt 51 disposé sur l'arbre d'entrée 1 et, d'autre part, le piston 28 contre le couvercle 7 par l'intermédiaire du plateau d'action 13 et de la butée 27, qui est du type à roulement à bille.

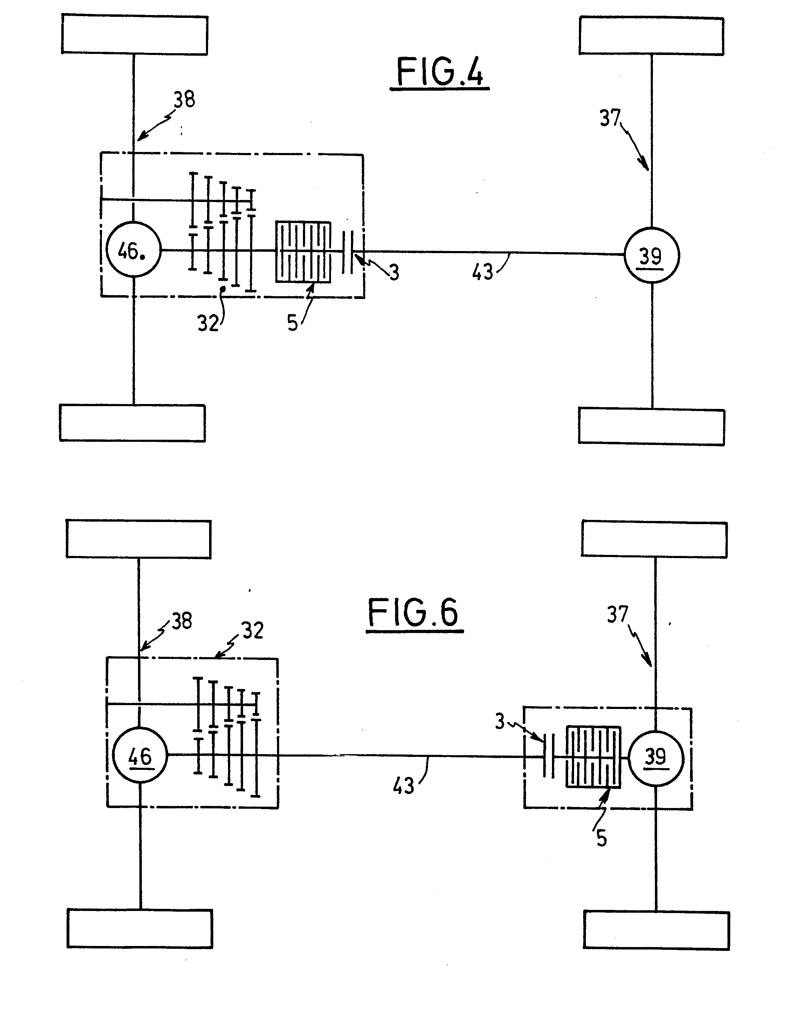

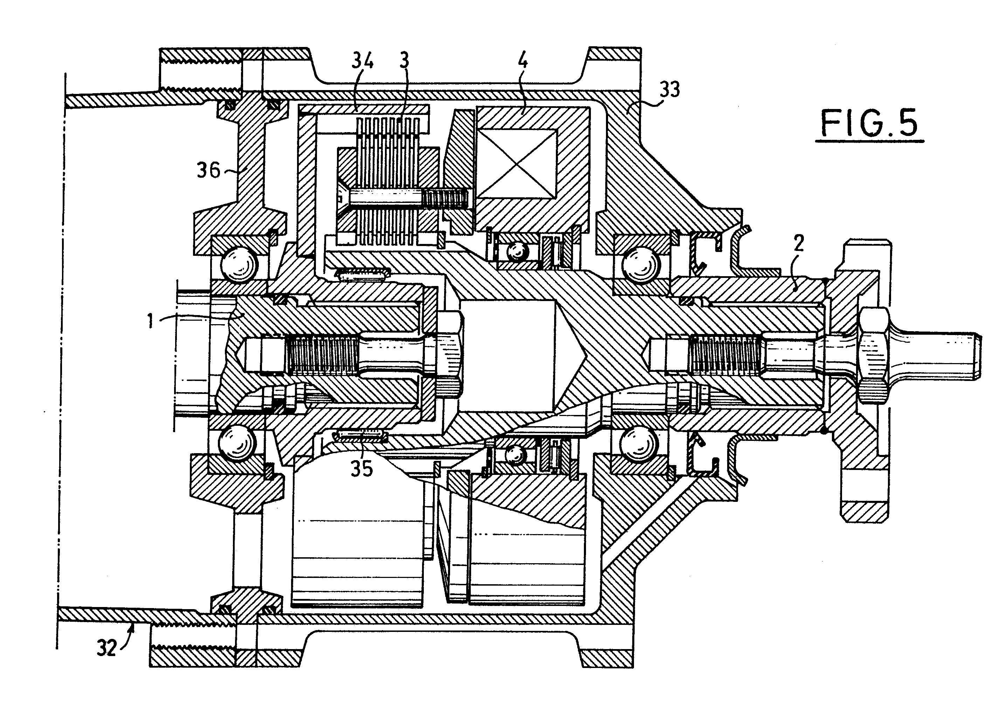

La figure 4 représente un mode de réalisation de l'invention où le module de transfert de couple est intégré à la boîte de vitesses 32 du véhicule. Sur le détail de cette réalisation représentée sur la figure 5, on voit que le système visqueux 5 est monté dans la boîte de vitesses 32, tandis que l'embrayage à disques multiples 3 et l'ensemble à électro-aimant 4 sont disposés à l'intérieur d'un carter de fermeture 33. L'embrayage à disques multiples 3 relie une cloche 34 solidaire de l'arbre d'entrée 1, à l'arbre de sortie 2. L'embrayage à disques multiples 3 est constitué d'une manière analogue à celui de la figure 1. L'arbre de sortie 2 est supporté au moyen d'une cage à aiguilles 35 par l'arbre d'entrée 1. Un couvercle 36 de boîte de vitesses supporte l'arbre d'entrée 1, et reçoit le carter de fermeture 33, qui vient se monter directement sur ledit couvercle 36 appliqué sur le carter de boîte de vitesses 32.

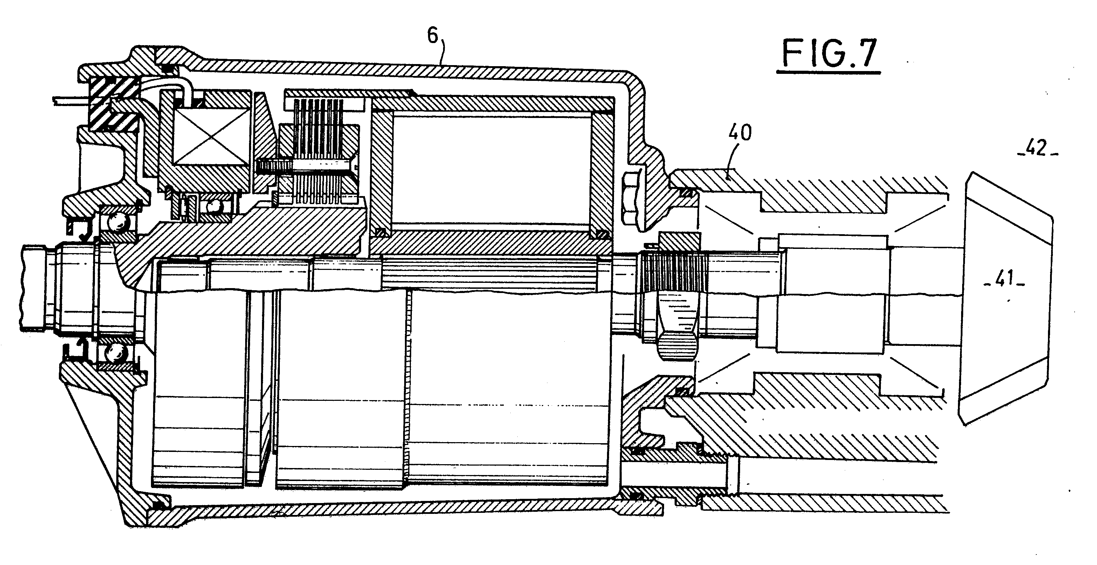

Les figures 6 et 7 représentent un mode de réalisation de l'invention où le module de transfert de couple est intégré au pont 39 de l'essieu arrière 37 du véhicule. Dans cet ensemble, le carter 6 du module de transfert de couple est monté et est fixé directement sur le carter 40 du pont 39 de l'essieu arrière 37. Dans cette configuration, l'arbre de sortie 2 est l'arbre du pignon d'attaque 41 du couple conique 42 du pont 39 de l'essieu arrière 37.

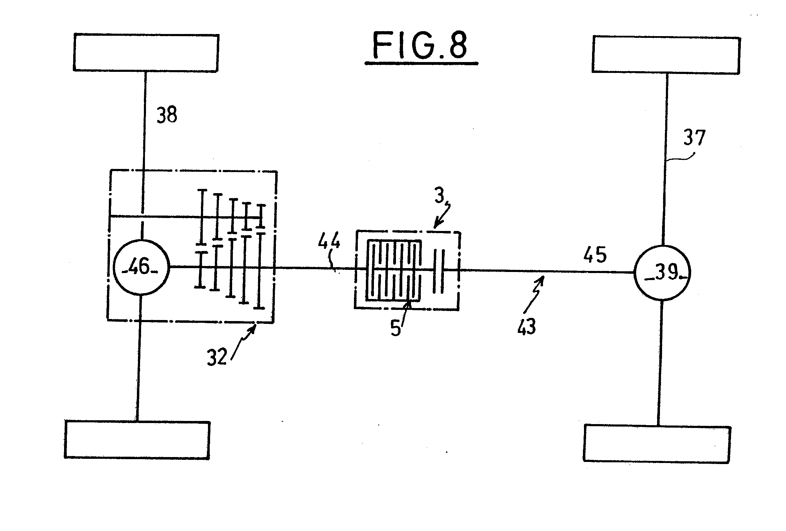

La figure 8 représente un mode de réalisation de l'invention, dans lequel le module de transfert de couple est disposé sur l'arbre de transmission longitudinal 43 du véhicule. Cet arbre de transmission longitudinal 43 relie la boîte de vitesse 32 avec le pont 46 de l'essieu avant 38, au pont 39 de l'essieu arrière 37. L'arbre de transmission 43 est composé d'un arbre de transmission avant 44, et d'un arbre de transmission arrière 45. L'arbre de transmission avant 44 est relié à une bride d'accouplement 9 solidaire dans le cas de la figure 1 avec l'arbre de sortie 2, et l'arbre de transmission arrière 45 est relié à une bride d'accouplement 8 solidaire de l'arbre d'entrée 1 comme cela est représenté sur la figure 1. Il faut en effet noter que le module de transfert de couple est symétrique et que l'arbre d'entrée 1 de la figure 1 peut avoir la fonction de sortie de mouvement, tandis que l'arbre de sortie 2 de la figure 1 peut avoir la fonction d'entrée du mouvement.

**Revendications**

1 - Dispositif de transmission pour véhicule automobile à quatre roues motrices caractérisé en ce qu'il comporte un module de transfert de couple entre l'essieu avant et l'essieu arrière du véhicule, ledit module de transfert de couple comprenant un système visqueux (5) associé à un embrayage de coupure muni d'un système de commande.

2 - Dispositif de transmission selon la revendication 1 caractérisé en ce que l'embrayage de coupure est un embrayage à disques multiples (3).

3 - Dispositif de transmission selon la revendication 1 caractérisé en ce que le système de commande est un ensemble à électro-aimant (4), qui comporte une carcasse (10), un bobinage (12) et un plateau de fermeture (11).

4 - Dispositif de transmission selon les revendications 2 et 3 caractérisé en ce que le plateau de fermeture (11) reçoit les vis de liaison (15) du plateau d'action (13) de l'embrayage à disques multiples (3) dont le contre-plateau (14) est lui-même traversé par lesdites vis de liaison (15).

5 - Dispositif de transmission selon la revendication 1 caractérisé en ce que le système de commande consiste en une commande hydraulique.

6 - Dispositif de transmission selon les revendications 2 et 5 caractérisé en c que le plateau d'action (13) de l'embrayage à disques multiples (3) est commandé par un diaphragme (19) dont la périphérie (20) s'appuie sur une cloche (47) et dont la partie centrale (21) est commandée par une butée (22) liée à un piston (23) ; ledit piston (23) coulissant dans un corps (24) muni d'un canal d'alimentation (25) d'huile haute pression débouchant dans une chambre (26).

7 - Dispositif de transmission selon les revendications 2 et 5 caractérisé en ce que le plateau d'action (13) de l'embrayage à disques multiples (3) est commandé par une butée (27) poussée par un piston (28) ; ledit piston (28) coulissant dans un couvercle (7) du carter (6) ; ledit couvercle (7) étant muni d'un canal d'alimentation (29) d'huile à basse pression débouchant dans une chambre (30) : l'embrayage à disques multiples (3) étant monté sur un moyeu (17) solidaire du contre-plateau (14) et associé à l'arbre d'entrée (1) au moyen de cannelures (31), un ressort de rappel (18) étant disposé entre ledit moyeu (17) et le plateau d'action (13) solidaire en rotation de l'arbre d'entrée (1) au moyen des cannelures (31).

8 - Dispositif de transmission selon la revendication 1 caractérisé en ce que le module de transfert de couple est intégré à la boîte de vitesses (32).

9 - Dispositif de transmission selon les revendications 4 et 8 caractérisé en ce que le système visqueux (5) est monté dans la boîte de vitesses (32) et que l'embrayage à disques multiples (3) et l'ensemble à électro-aimant (4) sont disposés à l'intérieur d'un carter de fermeture (33) ; l'embrayage à disques multiples (3) reliant une cloche (34) solidaire de l'arbre d'entrée (1) à l'arbre de sortie (2), l'arbre de sortie (2) étant supporté au moyen d'un cage à aiguilles (35) par l'arbre d'entrée (1) ; un couvercle (36) de boîte de vitesses supportant l'arbre d'entrée (1) et recevant le carter de fermeture (33) qui vient se monter directement sur ledit couvercle (36).

10 - Dispositif de transmission selon la revendication 1 caractérisé en ce que le module de transfert de couple est intégré au pont (39) de l'essieu arrière (37).

11 - Dispositif de transmission selon les revendications 4 et 10 caractérisé en ce que le carter (6) du module de transfert de couple est monté et est fixé directement sur le carter (40) du pont (39) de l'essieu arrière (37), l'arbre de sortie (2) étant l'arbre du pignon d'attaque (41) du couple conique (42) du pont (39) de l'essieu arrière (37).

12 - Dispositif de transmission selon la revendication 1 caractérisé en ce que le module de transfert de couple est disposé sur l'arbre de transmission longitudinal (43) du véhicule.

13 - Dispositif de transmission selon les revendications 4 et 12 caractérisé en ce que l'arbre de transmission avant (44) est relié à la bride d'accouplement (9), et en ce que l'arbre de transmission arrière (45) est relié à la bride d'accouplement (8).

FIG.1

0269527

**FIG.2**

7
51
20 13
47 3
16
5
24
25
23
19
21
26 22
1
6

**FIG.3**

29
30
7
28 13
18
6
3
16
14
17
1
27
31 51

0269527

## FIG.4

## FIG.6

FIG.5

0269527

FIG.7

0269527

FIG.8

Office européen
des brevets

# RAPPORT DE RECHERCHE EUROPEENNE

Numero de la demande

EP 87 40 2687

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | EP-A-0 207 395 (HONDA) <br> * Page 1, dernier alinéa - page 2, premier alinéa; page 15, dernier alinéa - page 19, premier alinéa; figure 7 * <br> --- | 1,2,5,6 ,7 | B 60 K 17/35 <br> B 60 K 23/08 <br> B 60 T 8/32 |
| E | EP-A-0 217 124 (MAZDA MOTOR CORP.) <br> * Résumé; page 14, lignes 8-18; figure 2 * <br> --- | 1,3 | |
| X | GB-A-2 139 972 (VOLKSWAGENWERK AG) <br> * En entier * <br> --- | 1-3,5,8 ,10-12 | |
| A | EP-A-0 149 302 (AMERICAN MOTORS CORP.) <br> * Page 10, revendications 1,2 * <br> --- | 1,10,12 | |
| A | DE-A-3 609 821 (VOLKSWAGENWERK AG) <br> * Résumé; figure * <br> --- | 2,5,7, 12 | |
| A | FR-A-1 326 822 (WITZEL) <br> * Figures * <br> --- | 2-4 | |
| A | FR-A-1 195 800 (PINTSCH BAMAG) <br> * Figures * <br> --- | 2-4 | DOMAINES TECHNIQUES RECHERCHES (Int. Cl.4) |
| A | GB-A-1 234 402 (POLLARD BEARINGS LTD) <br> * Page 3, lignes 70-92; figure 2 * <br> --- | 5,6 | B 60 K <br> F 16 D <br> B 60 T |
| A | US-A-2 587 230 (SCHAAD) <br> * En entier * <br> --- | 5,7 | |
| A | FR-A-1 556 578 (COVENTRY GAUGE & TOOL CO.) <br> * En entier * <br> ----- | 5,7 | |

Le présent rapport a été établi pour toutes les revendications

| Lieu de la recherche | Date d'achèvement de la recherche | Examinateur |
|---|---|---|
| LA HAYE | 01-02-1988 | MENDE H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)